# FASCICULE DE BREVET EUROPEEN

(11) **EP 2 068 649 B1**
(45) Date de publication et mention de la délivrance du brevet: **07.08.2019**
(21) Numéro de dépôt: 07848225.4
(22) Date de dépôt: 13.09.2007
(51) Int. Cl.: A23L 7/196, A23L 33/10, A23L 33/15, A23L 33/16, A23L 5/10

(54) **PROCÉDÉ DE TRAITEMENT DE GRAINS DE RIZ ET GRAIN DE RIZ CORRESPONDANT**
VERFAHREN ZUR VERARBEITUNG VON REISKÖRNERN UND ENTSPRECHENDES REISKORN
METHOD FOR PROCESSING RICE GRAINS AND CORRESPONDING RICE GRAIN

(30) Priorité: 13.09.2006 FR 0608056
(43) Date de publication de la demande: 17.06.2009
(73) Titulaire: Panzani, 69006 Lyon (FR)
(72) Inventeur: MINIER, Chantal, Lucie, Paulette, 13400 Aubagne (FR); AREKION, Isabelle, Françoise, 13004 Marseille (FR)
(74) Mandataire: Weber, Jean-François
(86) Numéro de dépôt international: PCT/FR2007/001485
(87) Numéro de publication internationale: WO 2008/031949

(56) Documents cités:
- CH-A- 387 428
- GB-A- 1 010 854
- US-A- 4 687 669
- US-A- 5 017 395
- JOSEPH E W ET AL: "DEVELOPMENT OF WASH AND COOK-PROOF METHODS FOR VITAMIN ENRICHMENT OF RICE GRAINS" JOURNAL OF FOOD SCIENCE, INSTITUTE OF FOOD TECHNOLOGISTS, CHICAGO, IL, US, vol. 55, no. 4, juillet 1990 (1990-07), pages 1102-1104,1107, XP000159985 ISSN: 0022-1147
- Gabi: "Risi Bisi", , 16 October 2003 (2003-10-16), Retrieved from the Internet: URL:http://forum.kochen-und-geniessen.de/k och-club-f1/rezepte-fuer-den-schnellkochto pf-t5339.html [retrieved on 2015-08-27]
- "Food composition and nutrition tables; Rice unpolished" In: Siegfried Souci; Fachmann Walter; Kraut Heinrich: "Food composition and nutrition tables = Die Zusammensetzung der Lebensmittel, Nährwert-Tabellen = La composition des aliments, tableaux des valeurs nutritives", 2000, Medpharm Scientific Publishers, Stuttgart pages 557-558,

## Description

### DOMAINE TECHNIQUE

La présente invention se rapporte au domaine technique général des procédés de traitement mis en oeuvre dans le domaine agroalimentaire, et notamment dans le domaine rizicole, pour améliorer les propriétés nutritionnelles et/ou organoleptiques des grains de céréales, que ces derniers soient dans leur état naturel ou aient subi auparavant des traitements préalables.

La présente invention concerne plus particulièrement un procédé de traitement de grains de riz comprenant une étape de chauffage desdits grains de riz en milieu humide et, préalablement à ladite étape de chauffage en milieu humide, une étape de mise en contact desdits grains de riz avec au moins une substance alimentaire présentant une fonction nutritionnelle et/ou organoleptique, de façon que ladite étape de chauffage en milieu humide entraîne la pénétration et l'inclusion d'au moins une fraction de ladite substance alimentaire à l'intérieur des grains de riz, de préférence dans leur albumen.

La présente invention concerne également un grain de riz (non revendiqué en tant que tel) obtenu par traitement d'un grain de riz initial, ledit grain de riz obtenu comprenant au moins une substance alimentaire renfermant elle-même au moins un ingrédient qui présente une fonction nutritionnelle et/ou organoleptique, dit ingrédient cible, la quantité dudit ingrédient cible incluse à l'intérieur dudit grain de riz obtenu étant sensiblement supérieure à la quantité du même ingrédient cible incluse dans le grain de riz initial.

### TECHNIQUE ANTERIEURE

Le grain de riz tel que récolté, généralement appelé riz paddy, est revêtu d'une enveloppe ligneuse appelée généralement « *balle* », qui le rend impropre à la consommation humaine. Il est donc connu de débarrasser le riz paddy de sa balle, par exemple par décorticage mécanique, en vue d'obtenir un riz susceptible d'être consommé, généralement appelé riz complet ou riz cargo. Ce riz complet est toutefois lui-même revêtu d'une pellicule grisâtre, appelée péricarpe. Afin d'améliorer encore l'aspect visuel et les qualités organoleptiques du riz, le péricarpe, ainsi qu'éventuellement d'autres couches qu'il recouvre, peut être enlevé par usinage de façon à obtenir un riz habituellement qualifié de riz « *blanchi ».*

Il est également connu de soumettre les grains de riz paddy, préalablement aux opérations d'enlèvement de la balle et du péricarpe, à un traitement hydrothermique habituellement qualifié d'étuvage, permettant notamment non seulement de faciliter le décorticage des grains, mais également de conférer au riz un caractère « *incollable* » par gélatinisation de l'amidon contenu dans les grains de riz.

Le riz blanchi, qu'il soit étuvé ou non, est généralement particulièrement apprécié des consommateurs. Il présente en revanche l'inconvénient d'avoir perdu, au fil du procédé de traitement industriel auquel il a été soumis, une fraction importante de ses qualités nutritionnelles. En effet, l'essentiel des nutriments, et en particulier des vitamines et des minéraux, est contenu dans la balle et le péricarpe, lesquels ont justement été enlevés pour obtenir du riz blanchi, comme cela a été décrit précédemment.

Il s'avère donc que le riz étuvé blanchi disponible pour le consommateur est notablement plus pauvre en vitamines et minéraux que le riz cargo, alors que les vitamines et minéraux sont pourtant des nutriments particulièrement bénéfiques pour l'organisme.

Afin de remédier à ce problème, il a été proposé de restaurer cette perte en vitamines et minéraux par enrobage superficiel des grains de riz étuvés à l'aide d'un revêtement renfermant des vitamines et minéraux. Chaque grain de riz est ainsi recouvert d'une pellicule de nutriments destinée à compenser les pertes nutritionnelles provoquées notamment par l'enlèvement de la balle et du péricarpe. Cependant, lors de l'opération de cuisson du riz ainsi traité par le consommateur final, les contraintes mécaniques et thermiques exercées sur les grains enrobés, et surtout l'excès d'eau auquel ces derniers sont soumis, provoquent le lessivage de l'enrobage, qui disparaît dans l'eau de cuisson. Le riz cuit, destiné à être consommé, a perdu ainsi la majeure partie de son enrobage de vitamines et minéraux.

Il est également connu d'utiliser un procédé permettant de faire pénétrer dans un grain de riz blanchi des vitamines. Les grains de riz subissent une étape permettant de faire pénétrer les vitamines en leur sein, étape au cours de laquelle ils sont mis en contact avec les vitamines et subissent un chauffage. Cette technique, bien que permettant la pénétration de vitamines dans le grain de riz, est relativement lente et ne permet pas de garantir une inclusion en profondeur des vitamines dans le grain.

Le document US-4,687,669 prévoit d'appliquer sur du riz poli enrichi par étuvage acide ou enduction un revêtement sous la forme d'une émulsion fusible afin de fixer les nutriments.

Le document CH-387 428 enseigne de recourir à une immersion du riz dans un liquide contenant des matières aromatisantes et à soumettre les grains à l'action de vapeur libre, pendant un temps assez court.

Les documents US-5,017,395 et GB-1,010,854 font quant à eux référence à des procédés d'étuvage.

### EXPOSE DE L'INVENTION

L'objet de l'invention vise en conséquence à porter remède aux différents inconvénients énumérés précédemment, et à proposer un nouveau procédé permettant d'obtenir du riz enrichi du point de vue nutritionnel et/ou organoleptique et de permettre un enrichissement en profondeur desdits grains de riz de façon particulièrement rapide, ledit enrichissement étant de surcroît particulièrement résistant à la cuisson.

Un autre objet de l'invention vise à protéger un nouveau procédé de traitement de grains de riz qui mette en oeuvre les principales étapes habituellement mises en oeuvre dans les procédés classiques d'étuvage de riz.

Un autre objet de l'invention vise à proposer un nouveau procédé de traitement de grains de riz qui permette d'enrichir les grains de riz de manière particulièrement économique.

Un autre objet de l'invention vise à proposer un nouveau procédé de traitement de grains de riz qui permette d'enrichir les grains de riz de façon particulièrement efficace et rapide.

Un autre objet de l'invention vise à proposer un nouveau procédé de traitement de grains de riz qui soit à même d'utiliser les étapes classiques mises en oeuvre dans les procédés connus d'étuvage de riz pour pratiquer l'enrichissement nutritionnel et/ou organoleptique du riz.

Un autre objet de l'invention vise à proposer un nouveau procédé de traitement de grains de riz qui permette de faire pénétrer et de distribuer de manière particulièrement homogène une substance alimentaire présentant une fonction nutritionnelle et/ou organoleptique au sein des grains de riz, tout en permettant de conférer audit grain de riz un caractère incollable.

Un autre objet de l'invention vise à proposer un nouveau procédé de traitement de grains de riz permettant d'obtenir un riz étuvé usiné blanchi incorporant de façon particulièrement stable plus de 200 % des vitamines du riz complet standard et/ou plus de 300 % des vitamines du riz étuvé blanchi standard et/ou plus de 200 % des minéraux du riz complet standard et/ou plus de 250 % des minéraux du riz étuvé blanchi standard.

Un autre objet de l'invention vise à proposer un nouveau grain de riz enrichi du point de vue nutritionnel et/ou organoleptique et dont l'enrichissement résiste particulièrement bien à la cuisson.

Un autre objet de l'invention vise à proposer un nouveau grain de riz susceptible d'inclure de façon pérenne et stable des quantités de certains nutriments supérieures à celles présentes dans le riz complet standard.

Un autre objet de l'invention vise à proposer un nouveau grain de riz enrichi de façon particulièrement stable à la fois en vitamine et en minéraux.

Les objets assignés à l'invention sont atteints à l'aide d'un procédé selon la revendication 1.

### MEILLEURE MANIERE DE REALISER L'INVENTION

D'autres objets et avantages de l'invention seront explicités plus en détails à la lecture de la description qui suit.

Le procédé de traitement de grains de riz conforme à l'invention est un procédé destiné à être appliqué sur des masses de grains de riz qui sont soit des grains de riz tels que récoltés, soit des grains de riz ayant déjà subi une transformation, et par exemple un décorticage, un étuvage, un polissage ou une pré-cuisson. Par conséquent, les grains de riz destinés à être traités selon le procédé conforme à l'invention peuvent appartenir à une ou plusieurs des catégories suivantes : grains de riz paddy, grains de riz cargo, grains de riz étuvés, grains de riz blanchis, cette liste n'étant bien entendu nullement limitative.

Le procédé conforme à l'invention se prête particulièrement bien, comme cela ressortira de la description qui suit, à la mise en oeuvre industrielle en vue d'obtenir un riz propre à la consommation humaine. Il est cependant tout à fait envisageable de mettre en oeuvre le procédé conforme à l'invention de façon artisanale, et/ou en vue d'obtenir un riz destiné à d'autres utilisations que la consommation humaine, et par exemple la consommation animale.

De préférence, le procédé de traitement conforme à l'invention s'applique sur des grains de riz de structure naturelle, c'est-à-dire des grains de riz qui même s'ils ont subi préalablement des traitements industriels, ne sont pas reconstitués. Le procédé conforme à l'invention ne constitue avantageusement pas lui-même un procédé de fabrication de grains de riz reconstitués.

Le procédé conforme à l'invention comprend une étape de chauffage des grains de riz en milieu humide, c'est-à-dire une étape au cours de laquelle on élève la température des grains de riz à une valeur supérieure à la température ambiante, et par exemple comprise entre 40 et 150° C, et de préférence entre 60 et 120° C, la plage 60°C - 100°C donnant également d'excellents résultats. Cette élévation en température est effectuée alors que les grains de riz sont placés dans un environnement humide, lequel pouvant être soit liquide (auquel cas les grains de riz sont par exemple immergés dans un liquide) soit gazeux ou pseudo-gazeux (auquel cas l'humidité est distribuée dans l'atmosphère environnant lesdits grains de riz, par exemple sous la forme d'une phase vapeur).

Comme cela sera explicité plus en détails dans ce qui suit, cette étape de chauffage des grains de riz constitue ou fait partie d'une étape d'étuvage au sens classique dans le domaine de l'industrie de transformation du riz.

Le procédé conforme à l'invention comprend, préalablement à l'étape de chauffage en milieu humide, une étape de mise en contact des grains de riz avec au moins une substance alimentaire présentant une fonction nutritionnelle et/ou organoleptique, de façon que ladite étape de chauffage en milieu humide entraîne la pénétration et l'inclusion d'au moins une fraction de ladite substance alimentaire à l'intérieur des grains de riz, et de préférence entraîne la pénétration et l'inclusion d'au moins une fraction de ladite substance alimentaire dans l'albumen, c'est à dire le coeur, de chaque grain de riz.

Par substance alimentaire présentant une fonction nutritionnelle, on désigne ici une substance comestible autre que l'eau, capable d'assurer une fonction nutritionnelle, c'est-à-dire une substance incluant des ingrédients susceptibles d'être utilisés par l'organisme pour satisfaire ses besoins physiologiques, que lesdits ingrédients soient digestibles et métabolisables (ce qui est le cas par exemple des vitamines et des sels minéraux) ou non (ce qui est le cas par exemple des ingrédients favorisant la fonction intestinale).

Par substance alimentaire présentant une fonction organoleptique, on désigne ici une substance comestible autre que l'eau capable d'assurer une fonction organoleptique, c'est-à-dire présentant des propriétés perceptibles par au moins un récepteur sensoriel chez l'homme, ou éventuellement l'animal selon la destination des grains de riz traités.

Avantageusement, la substance alimentaire présentant une fonction nutritionnelle et/ou organoleptique comprend un ou plusieurs des ingrédients suivants : nutriments (et notamment vitamines et minéraux), arômes. Par exemple, la substance alimentaire en question comprend avantageusement au moins une vitamine, et de préférence une ou plusieurs des vitamines suivantes: B1, B3, B5, B6 et B9. De façon particulièrement préférée, la substance alimentaire comprend l'ensemble des vitamines B1, B3, B5, B6 et B9 précitées, de préférence additionnées de minéraux et en particulier de phosphore et/ou de magnésium.

L'étape de mise en contact des grains de riz avec ladite substance alimentaire présentant une fonction nutritionnelle et/ou organoleptique consiste avantageusement à entourer les grains de riz avec ladite substance alimentaire, et de préférence à revêtir sensiblement l'ensemble de la surface de chaque grain de riz à traiter avec ladite substance alimentaire, de façon que chaque grain de riz soit enrobé par ladite substance alimentaire. Il est bien évidemment envisageable, sans pour autant que l'on sorte du cadre de l'invention, de réaliser cette étape de mise en contact selon plusieurs modes opératoires alternatifs.

L'étape de mise en contact des grains de riz avec la substance alimentaire comprend une sous-étape de pulvérisation de la substance alimentaire sur les grains de riz, ladite substance alimentaire pouvant être pulvérisée à l'état solide, sous forme de poudre sèche, ou à l'état liquide, en solution concentrée. Une telle sous-étape de pulvérisation est particulièrement intéressante en ce qu'elle permet de réaliser de façon rapide et efficace une mise en contact intime de la substance alimentaire avec les grains de riz, en produisant un recouvrement sensiblement uniforme et homogène de chaque grain de riz par la substance alimentaire.

Il est par exemple envisageable (non revendiqué) que l'étape de mise en contact des grains de riz avec la substance alimentaire comprenne de façon alternative une sous-étape de mélange des grains de riz avec une solution liquide très concentrée de ladite substance alimentaire. Dans ce cas, les grains de riz sont par exemple immergés dans un bain de ladite solution liquide de façon qu'après retrait des grains de riz hors du bain une pellicule de ladite solution liquide subsiste à la surface de chaque grain de riz. Il est également envisageable (non revendiqué) de maintenir en permanence les grains de riz dans le bain de solution liquide de façon que l'étape de chauffage soit effectuée alors que les grains sont immergés dans le bain.

Comme cela a été décrit dans ce qui précède, l'étape de mise en contact des grains de riz avec la substance alimentaire est suivie de l'étape de chauffage en milieu humide. Ainsi, alors que les grains de riz sont en contact, et de préférence en contact intime, avec la substance alimentaire, l'étape de chauffage en milieu humide est mise en oeuvre, ce qui entraîne la migration de la substance alimentaire à l'intérieur du grain de riz, vers et dans le coeur, c'est à dire l'albumen, de ce dernier, de telle sorte qu'au moins une fraction de la substance alimentaire se retrouve enfermée de manière stable au sein même du grain de riz, dans la structure interne de ce dernier. Cette inclusion de la substance alimentaire au coeur du grain de riz permet en particulier d'éviter tout phénomène de lessivage de la substance alimentaire lors de la cuisson ultérieure du grain de riz traité par le consommateur final. Ainsi, lorsque la substance alimentaire comprend des vitamines et des minéraux, ces vitamines et minéraux vont se retrouver enchâssés à l'intérieur même de l'albumen du grain de riz et ne seront donc que peu voire pas du tout dégradés ou lessivés lors du processus de cuisson.

La pénétration et l'inclusion de la substance alimentaire à l'intérieur des grains de riz sont donc obtenues par la double mesure technique suivante :
- mise en contact de la substance alimentaire avec les grains de riz à traiter,
- chauffage en milieu humide des grains de riz en contact avec la substance alimentaire, de sorte que ledit milieu humide forme un vecteur pénétrant à l'intérieur du grain de riz, au coeur même de ce dernier, et entraîne avec lui la substance alimentaire.

Le milieu humide forme donc un véhicule pour la substance alimentaire qui permet à cette dernière de franchir les différentes barrières la séparant du coeur du grain de riz, et notamment la balle ligneuse, le péricarpe et les autres enveloppes inférieures (si le grain de riz à traiter est du riz paddy).

Le chauffage permet de faciliter la pénétration et l'inclusion de la substance alimentaire, pénétration et inclusion qui sont obtenues de façon particulièrement rapide et fiable lorsque la substance alimentaire, ou du moins ses ingrédients présentant une fonction nutritionnelle et/ou organoleptique, présente un caractère soluble dans le milieu humide. Dans ce cas de figure particulièrement avantageux où la substance alimentaire est soluble dans le milieu humide (c'est-à-dire qu'elle est avantageusement hydrosoluble si le milieu humide est constitué majoritairement d'eau), ladite substance alimentaire est dissoute dans le milieu humide ce qui facilite le transport de ladite substance alimentaire par le milieu humide à l'intérieur du grain de riz, jusqu'à son albumen.

Le milieu humide comprend majoritairement, et de préférence exclusivement, de la vapeur d'eau, et de préférence de la vapeur d'eau saturée qui permet une excellente pénétration à l'intérieur du grain de riz autorisant ainsi une distribution particulièrement homogène et uniforme de la substance alimentaire à l'intérieur du grain de riz. Selon cette variante particulièrement préférée de l'invention, l'étape de chauffage en milieu humide forme donc une étape de chauffage à la vapeur.

Il est cependant tout à fait envisageable (non revendiqué) que le milieu humide soit majoritairement formé d'un liquide, et par exemple d'eau liquide. L'utilisation d'eau liquide en tant que milieu humide pour l'étape de chauffage est cependant moins intéressante sur certains aspects que la mise en oeuvre de vapeur d'eau en tant que milieu humide, car le chauffage à la vapeur d'eau, contrairement à un chauffage dans de l'eau liquide, permet notamment de conférer au riz un caractère d'incollabilité. Ainsi, l'étape de chauffage à la vapeur permet d'assurer une double fonction, savoir d'une part une pénétration et une inclusion stable de la substance alimentaire à l'intérieur même du grain de riz, dans l'albumen, et d'autre part une incollabilité des grains de riz.

De manière générale, l'utilisation d'eau, et tout particulièrement de vapeur d'eau, en tant que milieu humide est particulièrement intéressante lorsque l'on souhaite faire pénétrer et inclure au sein des grains de riz des vitamines, et notamment des vitamines B1, B3, B5, B6 et B9 et/ou des minéraux, et notamment du phosphore et du magnésium, car les vitamines et minéraux présentent justement un caractère hydrosoluble.

Au cours de l'étape de chauffage en milieu humide, la pression régnant au sein dudit milieu humide est supérieure à la pression atmosphérique. De préférence, la pression régnant au sein du milieu humide excède la pression atmosphérique d'une valeur comprise entre 0,05 et 6 bars, et de façon encore plus préférentielle comprise entre 0,1 et 2 bars. Cette élévation de pression s'avère particulièrement avantageuse en ce qu'elle contribue à améliorer la pénétration de la substance alimentaire à l'intérieur du grain de riz.

De manière préférentielle, la mise en oeuvre d'une pression supérieure à la pression atmosphérique au cours de l'étape de chauffage humide permet, en effet, d'améliorer la rapidité et la profondeur de la pénétration au sein du grain de riz ainsi que la quantité de substance alimentaire pénétrant dans le grain de riz. Cela s'avère d'autant plus utile lorsque le grain de riz de départ comprend encore ses enveloppes superficielles, c'est à dire au moins son péricarpe. L'étape de chauffage en milieu humide constitue ainsi dans ce cas une étape de chauffage en milieu humide sous pression, étant entendu qu'il est tout particulièrement avantageux de mettre en oeuvre une étape de chauffage à la vapeur sous pression, qui permet de cumuler l'ensemble des avantages techniques évoqués dans ce qui précède.

Une telle étape de chauffage du riz à la vapeur, qu'elle soit effectuée à pression atmosphérique ou à une pression supérieure, constitue ou fait partie d'une étape d'étuvage au sens classique dans le domaine de l'industrie rizicole. En d'autres termes, la fonction de pénétration de la substance alimentaire exogène (c'est-à-dire extérieure au riz) peut être réalisée par une étape classique d'étuvage.

L'un des aspects de l'invention consiste ainsi à avoir identifié la possibilité d'obtenir une telle fonction de pénétration et d'inclusion, au sein du grain de riz, de substances alimentaires extérieures, et en particulier de vitamines et de minéraux, selon le simple déroulement suivant :
- mise en contact des grains de riz avec la substance alimentaire,
- mise en oeuvre d'une étape d'étuvage tout à fait classique, à la fois du point de vue de la température, de la durée et de la pression.

L'invention repose donc, dans sa variante préférentielle qui vient d'être décrite, sur une incorporation stable au coeur (albumen) des grains de riz d'une substance alimentaire initialement extérieure au grain de riz à l'aide d'une simple étape d'étuvage classique, mise en oeuvre par exemple au sein d'une enceinte fermée alimentée en vapeur d'eau par une chaudière.

Avantageusement, le procédé conforme à l'invention comprend en outre une étape d'apport d'eau aux grains de riz permettant d'augmenter la teneur en eau desdits grains. Une telle étape d'apport d'eau est bien connue en tant que telle et est ici préférentiellement mise en oeuvre avant l'étape de chauffage en milieu humide, de manière à augmenter l'humidité du grain et permettre une gélatinisation de l'amidon pendant l'étape de chauffage en vue d'obtenir un riz incollable.

Cette étape d'apport d'eau peut être réalisée selon des modes variables de mise en oeuvre. Par exemple, cette étape d'apport d'eau peut consister en un trempage des grains de riz, c'est-à-dire en une immersion desdits grains de riz au sein d'un bain liquide, par exemple un bain d'eau, de manière à permettre une imbibition homogène des grains de riz jusqu'à une valeur cible prédéterminée de taux d'humidité. Un tel trempage s'avère notamment particulièrement bénéfique lorsque le grain de riz à traiter est un grain de riz *« brut* », de type paddy ou cargo, qui n'a jamais encore subi de traitement hydrothermique.

Une telle étape de trempage n'est cependant pas nécessaire lorsque le riz à traiter a déjà subi un traitement hydrothermique, et par exemple lorsque le riz à traiter est déjà un riz étuvé, usiné et blanchi. Dans ce cas, l'étape d'apport d'eau consiste avantageusement en un simple mouillage des grains de riz.

De telles opérations sont bien connues en tant que telles et ne seront donc pas décrites plus avant ici.

Il est tout à fait envisageable que l'étape de mise en contact des grains de riz avec la substance alimentaire soit mise en oeuvre en même temps que l'étape d'apport d'eau, et soit même confondue avec cette dernière. Dans ce cas, l'eau destinée à être apportée au grain de riz est additionnée de la substance alimentaire, selon une concentration suffisante pour permettre l'effet de pénétration et d'inclusion ultérieurement recherché. Une telle façon de procéder n'est cependant pas économique (en comparaison notamment avec une pulvérisation), car l'excès d'eau de trempage est jeté avec la substance alimentaire qu'il contient.

Il est donc préférable que l'étape de mise en contact des grains de riz avec la substance alimentaire se déroule après l'étape d'apport d'eau.

Ainsi, dans une variante avantageuse de l'invention, le procédé de traitement conforme à l'invention se déroule de la façon suivante, dans l'ordre chronologique :
- mise en oeuvre de l'étape d'apport d'eau aux grains de riz à traiter ;
- égouttage des grains ;
- mise en oeuvre de l'étape de mise en contact des grains de riz avec la substance alimentaire présentant une fonction nutritionnelle et/ou organoleptique, ladite mise en contact étant de préférence réalisée par pulvérisation sèche de la substance alimentaire sur les grains de riz ;
- mise en oeuvre de l'étape de chauffage en milieu humide, ladite étape de chauffage étant préférentiellement constituée par une étape de chauffage à la vapeur sous pression ;
- séchage des grains de riz ainsi traités ;
- décorticage et usinage.

Dans cette variante préférentielle de réalisation, le procédé conforme à l'invention permet ainsi d'obtenir un riz étuvé enrichi en vitamines et minéraux.

Comme on l'a déjà évoqué dans ce qui précède, le procédé conforme à l'invention peut être appliqué à une grande variété de type de riz. Il est notamment particulièrement remarquable que l'invention permet de faire pénétrer une substance alimentaire exogène dans l'albumen d'un grain de riz paddy, c'est-à-dire que l'invention permet à la substance alimentaire, qui comprend de préférence des vitamines et minéraux, de traverser la balle ligneuse.

Les exemples qui suivent, fournis à titre purement illustratifs et non limitatifs, permettent d'illustrer encore plus précisément l'invention.

### Exemple 1 :

Dans cet exemple, le procédé conforme à l'invention est appliqué à des grains de riz paddy.

Les grains de riz paddy sont tout d'abord soumis à une étape d'apport d'eau, dans laquelle les grains de riz en question sont trempés dans de l'eau pendant une durée variant entre 1 et 4 heures à une température comprise entre 50 et 90° C, la durée et la température du trempage étant déterminées en fonction de la variété du riz pour obtenir une teneur en eau comprise de préférence entre 20 et 40 % en poids dans les grains de riz trempés.

Ce riz paddy trempé est ensuite égoutté puis mis en contact avec une substance alimentaire comprenant des vitamines B1, B3, B5, B6 et B9, du phosphore et du magnésium. Cette étape de mise en contact comprend une sous-étape de pulvérisation sur les grains de riz paddy trempés et égouttés d'une poudre sèche comprenant d'une part un mélange de vitamines B1, B3, B5, B6 et B9 et d'autre part du glycérophosphate de magnésium. La pulvérisation peut par exemple être effectuée à l'aide de buses pulvérisant une poudre sèche contenant les vitamines et minéraux sur les grains de riz alors que ces derniers sont convoyés par une vis d'Archimède entre le poste d'apport d'eau et le poste de chauffage en milieu humide. L'étape de mise en contact est menée de manière à ajouter au grain de riz 0,02 % de vitamines par rapport au poids des grains de riz trempés et égouttés et 1 % en poids de glycérophosphate de magnésium par rapport au poids des grains de riz trempés et égouttés.

On obtient ainsi des grains de riz paddy trempés égouttés et enrobés d'une poudre renfermant des vitamines B1, B3, B5, B6, B9 et du glycérophosphate de magnésium. Ce riz trempé égoutté enrobé est alors soumis à une étape de chauffage en milieu humide sous pression qui consiste à chauffer les grains de riz trempés égouttés enrobés dans une atmosphère saturée en vapeur d'eau avec une pression de vapeur supérieure à la pression atmosphérique, par exemple d'une valeur comprise entre 0,2 et 1 bars, et de préférence entre 0,3 et 0, 7 bars. Cette étape de chauffage en milieu humide sous pression entraîne la pénétration et l'inclusion des vitamines B1, B3, B5, B6, B9 ainsi que du phosphore et du magnésium à l'intérieur des grains de riz, c'est-à-dire au moins dans leur albumen. On obtient ainsi un riz paddy enrichi en vitamine B1, B3, B5, B6, B9 ainsi qu'en phosphore et en magnésium. Ce riz paddy est séché, puis soumis à des opérations d'usinage comprenant par exemple une sous-étape d'aplatissement des grains, de décorticage des grains dans laquelle on enlève la balle et le péricarpe, puis de polissage de manière à obtenir à la fin du procédé de traitement un riz étuvé usiné blanchi enrichi à coeur en vitamines et minéraux, avec un temps de cuisson de l'ordre par exemple de 10 minutes.

Le tableau 1 ci-après expose le résultat de l'analyse nutritionnelle du riz étuvé usiné blanchi obtenu à l'issu du procédé qui vient d'être décrit dans le présent exemple 1. Ce tableau expose les résultats obtenus d'une part pour du riz cru, c'est-à-dire issu directement du procédé de traitement sans opération physico-chimique supplémentaire et d'autre part pour du riz cuit, c'est-à-dire ayant subi une opération de cuisson (100g de riz cru dans 500 ml d'eau bouillante) en vue d'être consommé. Les valeurs obtenues pour le riz obtenu selon l'exemple 1 sont comparées à celles obtenues pour trois riz témoins.

**Tableau 1**

| Nutriments | Témoin 1 : riz cargo standard de l'art antérieur (pour 100 g) | Témoin 2 : riz étuvé standard de l'art antérieur (pour 100 g) | Témoin 3 : riz blanchi standard de l'art antérieur (pour 100 g) | Riz étuvé usiné blanchi conforme à l'invention, obtenu à l'issue du procédé de l'exemple 1 (pour 100 g) | Riz étuvé usiné blanchi conforme à l'invention, obtenu à l'issue du procédé de l'exemple 1, après cuisson effectuée par le consommateur final (pour 150 g, soit une portion, correspondant à 62,5 g de riz cru) |
|---|---|---|---|---|---|
| Vitamine B1 | 0,39 mg | 0,22 mg | 0,07 mg | 0,49 mg | 0,21 mg |
| Vitamine B3 | 4,8 mg | 3,4 mg | 1,6 mg | 10,8 mg | 5,25 mg |
| Vitamine B5 | 1,5 mg | 1 mg | 1 mg | 3,2 mg | 1,35 mg |
| Vitamine B6 | 0,51 mg | 0,38 mg | 0,2 mg | 0,77 mg | 0,37 mg |
| Vitamine B9 | 0,04 mg | 0,019 mg | 0,02 mg | 0,03 mg | 0,021 mg |
| Phosphore | 303 mg | 130 mg | 102 mg | 155 mg | 73,5 mg |
| Magnésium | 143 mg | 46 mg | 35 mg | 34 mg | 19,5 mg |

Afin d'éviter tout phénomène de précipitation résultant du mélange de phosphore et de magnésium, il peut par ailleurs s'avérer avantageux de n'insérer au sein du grain de riz qu'un seul minéral, ou de n'insérer au sein du grain de riz qu'un seul minéral à la fois.

### Exemple 2 :

Dans cet exemple, le procédé conforme à l'invention est appliqué à des grains de riz étuvés usinés blanchis obtenus selon les techniques de l'art antérieur.

Ce riz étuvé usiné blanchi est soumis en premier lieu à une étape d'apport d'eau, dans laquelle les grains de riz sont simplement mouillés pendant une durée variant entre 10 et 50 minutes, à une température comprise entre 50 et 90° C, la durée et la température du mouillage étant déterminées en fonction de la variété du riz pour obtenir une teneur en eau comprise de préférence entre 10 et 30 % en poids d'eau dans les grains de riz mouillés.

Ce riz mouillé est ensuite mis en contact avec une substance alimentaire comprenant des vitamines B1, B3, B5, B6 et B9, du phosphore et du magnésium. Cette étape de mise en contact comprend une sous-étape de pulvérisation sur les grains de riz mouillés d'une poudre sèche comprenant d'une part un mélange de vitamines B1, B3, B5, B6 et B9, et d'autre part du glycérophosphate de magnésium. Cette étape de mise en contact est menée de manière à ajouter au grain de riz 0,02 % de vitamines par rapport au poids des grains de riz mouillés et 1 % de glycérophosphate de magnésium par rapport au poids des grains de riz mouillés. La pulvérisation peut par exemple être effectuée à l'aide de buses pulvérisant une poudre sèche contenant les vitamines et minéraux sur les grains de riz alors que ces derniers sont convoyés par une vis d'Archimède entre le poste d'apport d'eau et le poste de chauffage en milieu humide.

On obtient ainsi des grains de riz mouillés enrobés d'une poudre renfermant des vitamines B1, B3, B5, B6 et B9 et du glycérophosphate de magnésium. Ce riz mouillé enrobé est alors soumis à une étape de chauffage en milieu humide sous pression qui consiste à chauffer les grains de riz mouillés enrobés dans une atmosphère saturée en vapeur d'eau avec une pression de vapeur supérieure à la pression atmosphérique, par exemple d'une valeur comprise entre 0, 01 et 0,5 bars. Cette étape de chauffage en milieu humide sous pression entraîne la pénétration et l'inclusion des vitamines B1, B3, B5, B6 et B9, ainsi que du phosphore et du magnésium à l'intérieur des grains de riz, c'est-à-dire au moins dans leur albumen. Ce riz est ensuite aplati et séché. On obtient ainsi un riz étuvé usiné blanchi enrichi à coeur en vitamines B1, B3, B5, B6 et B9 ainsi qu'en phosphore et en magnésium, ledit riz présentant en outre une durée de cuisson raccourcie, par exemple de l'ordre de 5 minutes, alors que le riz de départ présentait plutôt une durée de cuisson supérieure à 10 minutes.

Le tableau 2 ci-après expose le résultat de l'analyse nutritionnelle du riz étuvé usiné blanchi obtenu à l'issue du procédé qui vient d'être décrit dans le présent exemple 2. Ce tableau expose les résultats obtenus d'une part pour du riz cru, c'est-à-dire issu directement du procédé de traitement sans opération physico-chimique supplémentaire et d'autre part pour du riz cuit, c'est-à-dire ayant subi une opération de cuisson (100 g de riz cru dans 500 ml d'eau bouillante) en vue d'être consommé. Les valeurs obtenues pour le riz obtenu selon l'exemple 2 sont comparées à celles obtenues pour trois riz témoins.

**Tableau 2**

| Nutriments | Témoin 1 : riz cargo standard de l'art antérieur (pour 100 g) | Témoin 2 : riz étuvé standard de l'art antérieur (pour 100 g) | Témoin 3 : riz blanchi standard de l'art antérieur (pour 100 g) | Riz étuvé usiné blanchi conforme à l'invention, obtenu à l'issue du procédé de l'exemple 2 (pour 100 g) | Riz étuvé usiné blanchi conforme à l'invention, obtenu à l'issue du procédé de l'exemple 2, après cuisson effectuée par le consommateur final (pour 150 g, soit une portion, correspondant à 62,5 g de riz cru) |
|---|---|---|---|---|---|
| Vitamine B1 | 0,39 mg | 0,22 mg | 0,07 mg | 0,72 mg | 0,21 mg |
| Vitamine B3 | 4,8 mg | 3,4 mg | 1,6 mg | 10,3 mg | 3,6 mg |
| Vitamine B5 | 1,5 mg | 1 mg | 1 mg | 4,2 mg | 1,95 mg |
| Vitamine B6 | 0,51 mg | 0,38 mg | 0,2 mg | 0,78 mg | 0,25 mg |
| Vitamine B9 | 0,04 mg | 0,019 mg | 0,02 mg | 0,073 mg | 0,0195 mg |
| Phosphore | 303 mg | 130 mg | 102 mg | 287 mg | 90 mg |
| Magnésium | 143 mg | 46 mg | 35 mg | 125 mg | 36 mg |

En définitive, le procédé conforme à l'invention permet d'introduire au moins dans l'albumen des grains de riz des nutriments extérieurs. L'invention permet ainsi d'apporter des nutriments que le grain de riz ne possédait pas initialement, et/ou d'augmenter artificiellement les quantités d'autres nutriments déjà présents dans le riz, l'ensemble des nutriments apportés étant incorporés au moins au coeur du grain de riz, c'est-à-dire au moins dans l'albumen des grains de riz.

L'invention concerne également, de manière indépendante, un grain de riz (non revendiqué en tant que tel) obtenu par traitement d'un grain de riz initial, ledit traitement étant susceptible d'être conforme au traitement selon l'invention qui vient d'être décrit dans ce qui précède, mais pouvant également être un traitement différent.

Le grain de riz obtenu conformément à l'invention à partir du grain de riz initial comprend au moins une substance alimentaire renfermant elle-même au moins un ingrédient qui présente une fonction nutritionnelle et/ou organoleptique, dit ingrédient cible. Conformément à l'invention, la quantité dudit ingrédient cible incluse à l'intérieur dudit grain de riz obtenu est sensiblement supérieure à la quantité du même ingrédient cible incluse dans le grain de riz initial. Plus précisément, la quantité dudit ingrédient cible incluse au sein de l'albumen du grain de riz obtenu est sensiblement supérieure à la quantité du même ingrédient cible incluse dans l'albumen du grain de riz initial.

Selon l'invention, le grain de riz obtenu après le traitement comprend encore au moins son péricarpe. En d'autres termes, le grain de riz initial subit de préférence un traitement agroalimentaire au terme duquel il est enrichi en une substance alimentaire d'une part, et il comprend toujours au moins son péricarpe d'autre part.

Cette mesure technique permet à la fois un gain de temps au cours du traitement des grains de riz mais aussi une économie sur le coût de traitement. En effet, l'invention permet d'enrichir de préférence des grains de riz contenant au moins leur péricarpe et d'obtenir des grains de riz enrichis contenant également encore au moins leur péricarpe. Ainsi, il n'est pas nécessaire de retirer le péricarpe, ni d'ailleurs la plupart des autres enveloppes entourant le grain de riz.

L'invention couvre donc les deux alternatives suivantes :
- l'ingrédient cible est absent du coeur (l'albumen) du grain de riz initial et présent dans le coeur du grain de riz obtenu, de sorte que la quantité non nulle dudit ingrédient cible incluse au sein de l'albumen du grain de riz obtenu est supérieure à la quantité nulle du même ingrédient cible incluse dans l'albumen du grain de riz initial ;
- l'ingrédient cible est déjà présent (quantité non nulle) dans le coeur (l'albumen) du grain de riz initial ; l'ingrédient cible est présent dans le coeur (l'albumen) du grain de riz obtenu mais en une quantité supérieure à la quantité du même ingrédient cible incluse dans l'albumen du grain de riz initial.

En d'autres termes, le grain de riz conforme à l'invention est un grain de riz :
- qui est obtenu à partir d'un grain de riz initial,
- et dont l'albumen est enrichi relativement à l'albumen du grain de riz initial en au moins un ingrédient capable d'assurer une fonction nutritionnelle et/ou organoleptique.

Avantageusement, la quantité de l'ingrédient cible incluse à l'intérieur du grain obtenu représente au moins 105 %, et de préférence au moins 110 % de la quantité du même ingrédient cible incluse dans le grain de riz initial. De façon encore plus préférentielle, la quantité dudit ingrédient cible incluse dans l'albumen du grain obtenu représente au moins 105 %, et avantageusement au moins 110 %, de la quantité du même ingrédient cible incluse dans l'albumen du grain de riz initial.

De façon encore plus avantageuse, la quantité dudit ingrédient cible inclus dans l'intérieur du grain de riz obtenu représente un pourcentage compris entre 110 et 400 %, et de façon encore plus préférentielle compris entre 150 et 300 %, de la quantité du même ingrédient cible incluse dans le grain de riz initial.

Avantageusement, le ou les ingrédient(s) cible(s) est (sont) choisi(s) parmi les nutriments et/ou les arômes. De façon particulièrement préférentielle, le ou les ingrédient(s) cible(s) est (sont) choisi(s) parmi: la vitamine B1, la vitamine B3, la vitamine B5, la vitamine B6, la vitamine B9.

Avantageusement, le ou les ingrédient(s) cible(s) est (sont) choisi(s) parmi les minéraux, et de préférence parmi le phosphore et le magnésium. Selon un mode de réalisation préférentiel de l'invention, les ingrédients cibles comprennent à la fois des vitamines et des minéraux, et comprennent préférentiellement, conformément aux exemples 1 et 2 exposés précédemment, de la vitamine B1, B3, B5, B6 et B9, ainsi que du phosphore et du magnésium.

Avantageusement, le grain de riz initial à partir duquel est obtenu le grain de riz conforme à l'invention est un grain de riz appartenant à l'une des catégories suivantes : grains de riz paddy, grains de riz cargo, grains de riz étuvés, grains de riz blanchis, étant entendu que cette liste est purement illustrative et non limitative.

De façon particulièrement préférentiellement, le grain de riz obtenu conforme à l'invention constitue un grain de riz étuvé, et de préférence un grain de riz étuvé usiné blanchi.

De façon avantageuse, l'ingrédient cible est incorporé sensiblement au moins dans l'albumen des grains de riz, même s'il est envisageable que l'ingrédient cible se trouve non seulement dans l'albumen mais également dans des couches proches de l'albumen comme la couche subaleurone, la couche d'aleurone ou la nucelle, voire également dans le tégument, le péricarpe ou la balle.

### POSSIBILITE D'APPLICATION INDUSTRIELLE

L'invention trouve son application industrielle dans les traitements de produits mis en oeuvre dans le domaine agroalimentaire.

## Revendications

1. Procédé de traitement de grains de riz pour enrichir lesdits grains de riz du point de vue nutritionnel et/ou organoleptique, ledit procédé comprenant une étape de chauffage desdits grains de riz en milieu humide constituant, ou faisant partie d'une étape d'étuvage, et une étape de mise en contact desdits grains de riz avec au moins une substance alimentaire exogène présentant une fonction nutritionnelle et/ou organoleptique, de façon que ladite étape de chauffage en milieu humide entraîne la pénétration et l'inclusion d'au moins une fraction de ladite substance alimentaire à l'intérieur des grains de riz, de préférence dans leur albumen, **caractérisé en ce que** ladite étape de mise en contact est préalable à ladite étape de chauffage en milieu humide et comprend une sous-étape de pulvérisation de ladite substance alimentaire sur lesdits grains de riz pour que chaque grain de riz soit enrobé par ladite substance alimentaire, ledit milieu humide comprenant majoritairement de la vapeur d'eau, ledit procédé étant également **caractérisé en ce qu'**au cours de l'étape de chauffage en milieu humide, la pression régnant au sein dudit milieu humide est supérieure à la pression atmosphérique, ledit procédé permettant d'obtenir des grains de riz enrichis étuvés destinés à subir une cuisson ultérieure par le consommateur final.

2. Procédé selon la revendication 1 **caractérisé en ce que** la pression régnant au sein du milieu humide excède la pression atmosphérique d'une valeur comprise entre 0,05 et 6 bars, et de préférence comprise entre 0,1 et 2 bars.

3. Procédé selon la revendication 1 ou 2 **caractérisé en ce qu'**il comprend une étape d'apport d'eau auxdits grains permettant d'augmenter la teneur en eau desdits grains, ladite étape de mise en contact des grains de riz avec la substance alimentaire se déroulant après l'étape d'apport d'eau.

4. Procédé selon la revendication 3 **caractérisé en ce qu'**il comprend, après ladite étape d'apport d'eau et avant ladite étape de mise en contact, une étape d'égouttage des grains.

5. Procédé selon l'une des revendications précédentes **caractérisé en ce qu'**il comprend une étape de séchage des grains de riz après l'étape de chauffage en milieu humide.

6. Procédé selon l'une des revendications précédentes **caractérisé en ce que** ledit milieu humide comprend exclusivement de la vapeur d'eau.

7. Procédé selon la revendication précédente **caractérisé en ce que** ledit milieu humide comprend exclusivement de la vapeur d'eau saturée.

8. Procédé selon l'une des revendications précédentes **caractérisé en ce qu'**au cours de ladite sous-étape de pulvérisation, ladite substance alimentaire est pulvérisée sous forme de poudre sèche sur lesdits grains de riz.

9. Procédé selon l'une des revendications 1 à 8 **caractérisé en ce que** ladite substance alimentaire comprend au moins une vitamine, et de préférence une ou plusieurs des vitamines suivantes : B1, B3, B5, B6 et B9.

10. Procédé selon l'une des revendications 1 à 9 **caractérisé en ce que** les grains de riz destinés à être traités selon ledit procédé appartiennent à une ou plusieurs des catégories suivantes : grains de riz paddy, grains de riz cargo, grains de riz étuvés, grains de riz blanchis.

## Patentansprüche

1. Verfahren zur Verarbeitung von Reiskörnern, um die Reiskörner aus diätetischer und/oder organoleptischer Sicht anzureichern, wobei das Verfahren einen Schritt der Erhitzung der Reiskörner in feuchtem Milieu umfasst, der einen Schritt des Dämpfens darstellt oder Teil eines solchen ist, und einen Schritt des Inkontaktbringens der Reiskörner mit mindestens einer exogenen Lebensmittelsubstanz, die eine diätetische und/oder organoleptische Funktion aufweist, so dass der Schritt der Erhitzung in feuchtem Milieu das Eindringen und den Einschluss mindestens einer Fraktion der Lebensmittelsubstanz in den Reiskörnern, vorzugsweise in ihrem Eiweiß, nach sich zieht, **dadurch gekennzeichnet, dass** der Schritt des Inkontaktbringens vor dem Schritt der Erhitzung in feuchtem Milieu erfolgt und einen Unterschritt der Zerstäubung der Lebensmittelsubstanz auf den Reiskörnern umfasst, so dass jedes Reiskorn von der Lebensmittelsubstanz ummantelt wird, wobei das feuchte Milieu mehrheitlich Wasserdampf umfasst, wobei das Verfahren auch **dadurch gekennzeichnet ist, dass** während des Schritts der Erhitzung in feuchtem Medium der in dem feuchten Medium herrschende Druck höher als der Atmosphärendruck ist, wobei es das Verfahren ermöglicht, gedämpfte angereicherte Reiskörner zu erhalten, die dazu bestimmt sind, einem späteren Kochen durch den Endverbraucher unterzogen zu werden.

2. Verfahren nach Anspruch 1, **dadurch gekennzeichnet, dass** der in dem feuchten Milieu herrschende Druck den Atmosphärendruck um einen Wert zwischen 0,05 und 6 bar und vorzugsweise zwischen 0,1 und 2 bar übersteigt.

3. Verfahren nach Anspruch 1 oder 2, **dadurch gekennzeichnet, dass** es einen Schritt der Wasserzufuhr zu den Körnern umfasst, der es ermöglicht, den Wassergehalt der Körner zu erhöhen, wobei der Schritt des Inkontaktbringens der Reiskörner mit der Lebensmittelsubstanz nach dem Schritt der Wasserzufuhr erfolgt.

4. Verfahren nach Anspruch 3, **dadurch gekennzeichnet, dass** es nach dem Schritt der Wasserzufuhr und vor dem Schritt des Inkontaktbringens einen Schritt des Abtropfen Lassens der Körner umfasst.

5. Verfahren nach einem der vorhergehenden Ansprüche, **dadurch gekennzeichnet, dass** es einen Schritt des Trocknens der Reiskörner nach dem Schritt der Erhitzung in feuchtem Milieu umfasst.

6. Verfahren nach einem der vorhergehenden Ansprüche, **dadurch gekennzeichnet, dass** das feuchte Milieu ausschließlich Wasserdampf umfasst.

7. Verfahren nach dem vorhergehenden Anspruch, **dadurch gekennzeichnet, dass** das feuchte Milieu ausschließlich gesättigten Wasserdampf umfasst.

8. Verfahren nach einem der vorhergehenden Ansprüche, **dadurch gekennzeichnet, dass** während des Unterschritts der Zerstäubung die Lebensmittelsubstanz in Form von Trockenpulver auf den Reiskörnern zerstäubt wird.

9. Verfahren nach einem der Ansprüche 1 bis 8, **dadurch gekennzeichnet, dass** die Lebensmittelsubstanz mindestens ein Vitamin, vorzugsweise eines oder mehrere der folgenden Vitamine umfasst: B1, B3, B5, B6 und B9.

10. Verfahren nach einem der Ansprüche 1 bis 9, **dadurch gekennzeichnet, dass** die Reiskörner, die dazu bestimmt sind, gemäß dem Verfahren verarbeitet zu werden, einer oder mehreren der folgenden Kategorien angehören: Rohreiskörner, geschälte Reiskörner, gedämpfte Reiskörner, geschliffene Reiskörner.

## Claims

1. Method for treating rice grains in order to enrich said rice grains from the nutritional and/or taste point of view, said method comprising a step of heating said rice grains in a moist environment constituting or forming part of a stoving step, and a step of putting said rice grains in contact with at least one exogenous food substance having a nutritional and/or taste function, so that said heating in a moist environment gives rise to the penetration and inclusion of at least a fraction of said food substance inside the rice grains, preferably in the albumen thereof, **characterised in that** said step of putting in contact is prior to said step of heating in a moist environment and comprises a substep of spraying said food substance onto said rice grains so that each rice grain is enrobed with said food substance, said moist environment comprising mainly steam, said method also being **characterised in that**, during the step of heating in a moist environment, the pressure prevailing in said moist environment is higher than atmospheric pressure, said method making it possible to obtain stoved enriched rice grains intended to undergo subsequent cooking by the end consumer.

2. Method according to claim 1, **characterised in that** the pressure prevailing in the moist environment exceeds atmospheric pressure by a value of between 0.05 and 6 bar, and preferably between 0.1 and 2 bar.

3. Method according to claim 1 or claim 2, **characterised in that** it comprises a step of adding water to said grains for increasing the water content of said grains, said step of putting the rice grains in contact with the food substance taking place after the step of adding water.

4. Method according to claim 3, **characterised in that** it comprises, after said step of adding water and before said step of putting in contact, a step of draining the grains.

5. Method according to any of the preceding claims, **characterised in that** it comprises a step of drying the rice grains after the step of heating in a moist environment.

6. Method according to any of the preceding claims, **characterised in that** said moist environment comprises solely steam.

7. Method according to the preceding claim, **characterised in that** said moist environment comprises solely saturated steam.

8. Method according to any of the preceding claims, **characterised in that**, during said spraying substep, said food substance is sprayed in the form of dried powder onto said rice grains.

9. Method according to any of claims 1 to 8, **characterised in that** said food substance comprises at least one vitamin, and preferably one or more of the following vitamins: B1, B3, B5, B6 and B9.

10. Method according to any of claims 1 to 9, **characterised in that** the rice grains intended to be treated according to said method belong to one or more of the following categories: paddy rice grains, cargo rice grains, stoved rice grains, bleached rice grains.
